# EUROPÄISCHE PATENTANMELDUNG

(11) **EP 4 297 373 A1**
(43) Veröffentlichungstag der Anmeldung: **27.12.2023**
(21) Anmeldenummer: 23178188.1
(22) Anmeldetag: 08.06.2023
(51) Int. Cl.: H04L 67/12, H04L 67/00, H04W 4/42, H04W 4/50, B61L 27/57

(54) **BETRIEBSVERFAHREN UND NETZWERK**

(30) Priorität: 23.06.2022 DE 102022206329
(71) Anmelder: Siemens Mobility GmbH, 81739 München (DE)
(72) Erfinder: Dalamagkidis, Konstantinos, 90409 Nürnberg (DE); Husemann, Dirk, 91052 Erlangen (DE)
(74) Vertreter: Siemens Patent Attorneys

(57) **Zusammenfassung**

Die Erfindung betrifft ein Verfahren (100) zum Betreiben eines Netzwerkteilnehmers (20) in einem Netzwerk (10), ein entsprechendes Computerprogrammprodukt sowie ein Netzwerk (10), in dem ein Server (30) mit einem Netzwerkteilnehmer (20) verbunden ist. Dabei wird eine Betriebsanfrage (B) des Netzwerkteilnehmers (20) an den Server (30) gesendet (S2) und eine serverseitige Betriebsinformation (Is) vom Server (30) an den Netzwerkteilnehmer (20) als Antwort (A) auf die Betriebsanfrage (B) gesendet (S3). Die serverseitige Betriebsinformation (Is) charakterisiert dabei eine vorgegebene Konfiguration des Netzwerkteilnehmers (20) und eine aktuelle Betriebsumgebung des Netzwerkteilnehmers (20). Zudem wird die serverseitige Betriebsinformation (Is) mit einer netzwerkteilnehmerseitigen Betriebsinformation (In) des Netzwerkteilnehmers (20) verglichen (S4), welche die aktuelle Konfiguration des Netzwerkteilnehmers (20) und eine erwartete Betriebsumgebung des Netzwerkteilnehmers (20) charakterisiert. Schließlich wird in Abhängigkeit eines Ergebnisses des Vergleichs der Netzwerkteilnehmer (20) zumindest teilweise neuinitialisiert (S6, S7).

## Beschreibung

Die Erfindung betrifft ein Verfahren zum Betreiben eines Netzwerkteilnehmers in einem Netzwerk, ein entsprechendes Computerprogrammprodukt sowie ein Netzwerk, in dem ein Server mit einem Netzwerkteilnehmer verbunden ist.

Üblicherweise werden in einem Netzwerk Geräte bei der Inbetriebnahme konfiguriert, um ihren gewünschten Betrieb und/oder ihre Steuerbarkeit über das Netzwerk sicherzustellen. Dazu senden diese Geräte beispielsweise eine DHCP-Anfrage an einen Server im Netzwerk und konfigurieren sich gemäß seiner Antwort. Neben der Zuweisung einer Netzwerkadresse können die Geräte dabei auch eine Liste von Softwarepaketen und/oder Metadaten empfangen, welche dann bei einem ersten Bootvorgang geladen bzw. installiert werden.

Wird ein Gerät in das Netzwerk integriert, das zuvor bereits in einem anderen Netzwerk eingesetzt wurde, muss die Konfiguration des Geräts zum Zwecke der Konfliktvermeidung üblicherweise manuell auf eine Werkseinstellung zurückgesetzt werden. Ebenso kann ein manuelles Eingreifen notwendig werden, wenn sich die gewünschte Konfiguration des Geräts im Netzwerk im Laufe der Zeit ändert, zum Beispiel neue Zertifikate und/oder Schlüssel zur sicheren Kommunikation mit anderen Netzwerkteilnehmern verwendet werden sollen.

Vor diesem Hintergrund ist es eine Aufgabe der vorliegenden Erfindung, den Betrieb eines Netzwerkteilnehmers in einem Netzwerk zu verbessern, insbesondere zu vereinfachen und effizienter zu gestalten.

Diese Aufgabe wird gelöst durch ein Betriebsverfahren, ein Netzwerk und ein Computerprogrammprodukt gemäß den unabhängigen Ansprüchen.

Bevorzugte Ausführungsformen der Erfindung sind Gegenstand der abhängigen Ansprüche sowie der folgenden Beschreibung.

Bei einem, insbesondere computerimplementierten, Verfahren zum Betreiben eines Netzwerkteilnehmers in einem Netzwerk, insbesondere einem Zugnetzwerk, gemäß einem ersten Aspekt der Erfindung wird (i) eine Betriebsanfrage von einem Netzwerkteilnehmer an einen mit dem Netzwerkteilnehmer über ein Netzwerk verbundenen Server gesendet und (ii) eine serverseitige Betriebsinformation vom Server an den Netzwerkteilnehmer als Antwort auf die Betriebsanfrage gesendet. Die serverseitige Betriebsinformation charakterisiert dabei eine vorgegebene Konfiguration des Netzwerkteilnehmers und eine aktuelle Betriebsumgebung des Netzwerkteilnehmers. Zudem wird (iii) die serverseitige Betriebsinformation mit einer netzwerkteilnehmerseitigen Betriebsinformation des Netzwerkteilnehmers verglichen, welche die aktuelle Konfiguration des Netzwerkteilnehmers und eine erwartete Betriebsumgebung des Netzwerkteilnehmers - d. h. die Betriebsumgebung, von welcher der Netzwerkteilnehmer ausgeht - charakterisiert. Schließlich wird (iv) in Abhängigkeit eines Ergebnisses des Vergleichs der Netzwerkteilnehmer zumindest teilweise neuinitialisiert.

Eine zumindest teilweise Neuinitialisierung im Sinne der Erfindung ist vorzugsweise ein Zurücksetzen in einen Ursprungszustand, insbesondere einen Werkszustand, und die anschließende (Neu-)Konfiguration. Alternativ oder zusätzlich kann eine Neuinitialisierung aber auch eine Neukonfiguration einzelner vorgegebener Parameter oder Daten sein, ohne dass ein Zurücksetzen vorgenommen wird. Anders gesagt kann eine zumindest teilweise Neuinitialisierung sowohl ein Zurücksetzen und ein anschließendes (konventionelles) Bootstrapping als auch eine Anpassung oder Änderung einiger ausgewählter Parameter oder Daten umfassen.

Ein Aspekt der Erfindung basiert auf dem Ansatz, automatisiert eine Betriebsanfrage in einem Netzwerk an einen Server auszusenden, um eine einem Netzwerkteilnehmer vorliegende - d. h. netzwerkteilnehmerseitige - Betriebsinformation auf Plausibilität im Hinblick auf einen gewünschten Betrieb des Netzwerkteilnehmers im Netzwerk prüfen zu können. Der gewünschte Betrieb kann dabei vom oder mithilfe des Servers vorgegeben werden bzw. sein. Der Server stellt insofern zweckmäßigerweise als Antwort auf die Betriebsanfrage eine mit dem gewünschten Betrieb korrespondierende - d. h. serverseitige - Betriebsinformation zur Verfügung. Durch einen Vergleich der netzwerkteilnehmer- mit der serverseitigen Betriebsinformation lässt sich ermitteln, ob eine zumindest teilweise Neuinitialisierung notwendig ist. Bereits dadurch kann das Auftreten von Netzwerkonflikten vermieden und/oder das Risiko fehlerhaft arbeitender Netzwerkteilnehmer deutlich reduziert werden. Gegebenenfalls kann die Neuinitialisierung auch automatisch angestoßen werden. In diesem Fall ist ein manuelles Eingreifen gar nicht mehr notwendig.

Beispielsweise kann eine Komponente eines Schienenfahrzeugs, etwa ein Sensor, ein Aktuator, eine Recheneinheit und/oder dergleichen in ein anderes Schienenfahrzeug eingebaut und in das dortige Zugnetzwerk integriert werden, ohne dass Wartungspersonal die Komponente zeitaufwendig auf den Einbau vorbereiten muss. Stattdessen kann die Komponente bei der Inbetriebnahme im anderen Zugnetzwerk selbsttätig die Betriebsanfrage etwa an den zentralen Zugserver versenden und anhand dessen Antwort prüfen, ob beispielsweise die noch in ihrem Speicher abgelegte Netzwerkkonfiguration aus dem früheren Zugnetzwerk mit der vorgesehenen Netzwerkkonfiguration übereinstimmt. Beispielsweise kann geprüft werden, ob sich die Netzwerkadresse und/oder ein Hostname, eine kryptographische Konfiguration (zum Beispiel der Schlüssel zum Zugriff auf ein Software-Repository oder ein Zertifikat einer Zertifizierungsstelle), und/oder dergleichen geändert hat. Ist dies der Fall, kann sich die Komponente selbsttätig zurücksetzen oder zumindest eine Aufforderung zur Zurücksetzung an das Wartungspersonal ausgegeben werden. Insofern kann zumindest vermieden werden, dass beispielsweise bei einem Austausch die neu eingebaute Komponente zunächst unbemerkt mit einer falschen Konfiguration weiterbetrieben wird.

Da zum Beispiel aufgrund von Sicherheits- und Zertifizierungsanforderungen gerade bei Schienenfahrzeugen Komponenten eindeutig zuordenbar sein müssen, ist es zweckmäßig, dass ausgehend von der Betriebsanfrage nicht nur eine Konfiguration der Komponente, sondern auch deren angenommene - d. h. noch durch im Speicher abgelegte Daten charakterisierte - Betriebsumgebung überprüft wird. Beispielsweise kann durch die Komponente selbst geprüft werden, ob sich ein Identifikator, etwa eine Zugidentifikationsnummer wie die UIC-Nummer und/oder eine Wagennummer des Wagens, in dem die Komponente verbaut ist, geändert hat. Somit kann selbst bei einer zufällig oder flottenübergreifend gleichen Netzwerkkonfiguration ein Umbau in einen anderen Zug automatisch festgestellt und entsprechend reagiert werden.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform wird die Betriebsanfrage zunächst bei Inbetriebnahme des Netzwerkteilnehmers im Netzwerk gesendet. Es ist bevorzugt, dass die Betriebsanfrage anschließend periodisch, beispielsweise alle zwei Stunden, gesendet wird. Dadurch lässt sich nicht nur ein Neueinbau eines Geräts zum Beispiel in einen anderen Zug feststellen, sondern auch Anpassungen der Gerätekonfiguration bei sich ändernden Betriebsbedingungen und/oder (Software-)Updates des Geräts besonders aufwandsarm durchführen. Soll beispielsweise nach Inbetriebnahme des Geräts eine kryptographische Information geändert werden, etwa bei einem sog. key rollover, ist es ausreichend, diese Information in einem Speicher des (Zug-)Servers zu ändern. Bei der nächsten Betriebsanfrage kann das Update automatisiert erkannt und im Rahmen einer teilweisen Neuinitialisierung installiert werden.

In einer weiteren bevorzugten Ausführungsform ist die serverseitige Betriebsinformation ein Hashwert. Zweckmäßigerweise wird dieser Hashwert mit einem aus der aktuellen Konfiguration des Netzwerkteilnehmers und der erwarteten Betriebsumgebung erzeugten Hashwert verglichen, was den Vergleich beschleunigen kann. Durch Verwendung von Hashwerten müssen darüber hinaus keine Konfigurations- und Betriebsumgebungsdaten, aus denen sich die Konfiguration bzw. die Betriebsumgebung ableiten lässt, versendet werden. Insofern kann der Datenverkehr reduziert werden.

In einer weiteren bevorzugten Ausführungsform ist die serverseitige Betriebsinformation statisch. Mit anderen Worten liegt die serverseitig vorgehaltene Information zur Konfiguration und Betriebsumgebung vorzugsweise bereits aufbereitet, etwa an einem (Speicher-)Ort zusammengefasst, vor. Die serverseitige Betriebsinformation kann beispielsweise in Form eines JSON-Objekts vorliegen. Dies kann einerseits die Verwaltung der serverseitigen Betriebsinformation erleichtern und andererseits die Lese- bzw. Verarbeitbarkeit dieser Information zum Beispiel durch den Netzwerkteilnehmer sicherstellen.

Alternativ wird die serverseitige Betriebsinformation als Antwort auf die Betriebsanfrage aus verschiedenen Informationsquellen zusammengesetzt. Anders gesagt kann die serverseitige Betriebsinformation auch dynamisch sein. Zu diesem Zweck können Vorlagen für unterschiedliche Teile der vorgegebenen Konfiguration und/oder aktuellen Betriebsumgebung vorgesehen sein, deren Inhalt durch im oder über das Netzwerk laufende Dienste beeinflusst wird oder beeinflussbar ist. Dadurch kann zum einen sichergestellt werden, dass die serverseitige Betriebsinformation stets aktuell ist, d. h. beispielsweise dem Netzwerkteilnehmer tatsächlich die vorgegebene Konfiguration und die aktuelle Betriebsumgebung mitgeteilt wird. Zum anderen erlaubt dies aber auch eine gewisse Steuerung des Netzwerkteilnehmers oder zumindest eine gezielte Manipulation seiner Konfiguration.

Es ist insofern bevorzugt, dass die serverseitige Betriebsinformation - jedenfalls bei Bedarf - gezielt derart zusammengesetzt wird, dass ein vorgegebenes Vergleichsergebnis erzeugt und damit eine vorgegebene zumindest teilweise Neuinitialisierung eingeleitet wird. Beispielsweise kann die serverseitige Betriebsinformation derart manipuliert werden, dass netzwerkteilnehmerseitig ein erneutes komplettes Bootstrapping durchgeführt wird, lediglich eine kryptographische Information aktualisiert oder Benutzerdaten gelöscht werden.

Es ist beispielsweise denkbar, dass über eine Wartungs- oder Benutzerschnittstelle eine Zurücksetzungsinstruktion erzeugt wird, gemäß der etwa die vorgegebene Konfiguration gezielt geändert wird, um in der Folge eine gewünschte Zurücksetzung des Netzwerkteilnehmers zu veranlassen. Ebenso könnten öffentliche Schlüssel zum Zugriff auf eine Software- und/oder Datenadresse erneuert werden. Der Netzwerkteilnehmer würde dann im Zuge der nächsten Betriebsanfrage und dem damit verbundenen Vergleich seine Kopie dieser Schlüssel aktualisieren.

Beim Zusammensetzten der serverseitigen Betriebsinformation können vorteilhaft Hashwerte verwendet werden. Es ist beispielsweise bevorzugt, dass die serverseitige Betriebsinformation einen Hashwert einer Netzwerkkonfiguration des Netzwerkteilnehmers (20), einer oder mehreren Adressen eines Daten- und/oder Software-Speichers, eines Schlüssels und/oder Zertifikats einer Public-Key-Infrastruktur und/oder weiterer Betriebsinformationssubblöcke oder dergleichen enthält. Um die Sicherheit erhöhen zu können, werden die aus den verschiedenen Informationsquellen abgefragten Betriebsinformationsfragmente zweckmäßigerweise kryptographisch gehasht.

In einer weiteren bevorzugten Ausführungsform wird der Netzwerkteilnehmer in Abhängigkeit des Vergleichsergebnisses zunächst in einen Ursprungszustand zurückgesetzt und anschließend mit der vorgegebenen Konfiguration und in der aktuellen Betriebsumgebung in Betrieb genommen wird. Mit anderen Worten wird - in Abhängigkeit des Vergleichsergebnisses - ein Bootstrapping vorgenommen, bei dem die vorgegebene Konfiguration und weitere, mit der aktuellen Betriebsumgebung korrespondierende Daten auf den Netzwerkteilnehmer angewandt bzw. vom Netzwerkteilnehmer hinterlegt werden. Dadurch kann automatisiert sichergestellt werden, dass das Netzwerk keine falsch konfigurierten Netzwerkteilnehmer enthält und insofern in dieser Hinsicht keine Konflikte oder Fehler auftreten können.

Alternativ können auf Grundlage des Vergleichsergebnisses zunächst vom Netzwerkteilnehmer gesammelte Daten gelöscht und/oder der Netzwerkteilnehmer in den Ursprungszustand zurückgesetzt werden und anschließend der Netzwerkteilnehmer außer Betrieb genommen, beispielsweise ausgebaut oder demontiert, werden.

Des Weiteren kann - alternativ oder zusätzlich - in Abhängigkeit des Vergleichsergebnisses eine kryptographische Information des Netzwerkteilnehmers erneuert werden. Somit lässt sich der Aufwand zur Verwaltung des Netzwerks bzw. aller Netzwerkteilnehmer signifikant vermindern.

In einer weiteren bevorzugten Ausführungsform kennzeichnet die Betriebsinformation zumindest eines der folgenden: (i) eine Netzwerkkonfiguration, beispielsweise eine Netzwerkadresse, einen Hostnamen und/oder dergleichen, (ii) eine Software- oder Datenadresse, zum Beispiel eine Repository URI für Software, Meta- und/oder Konfigurationsdaten und/oder dergleichen, (iii) ein Zertifikat und/oder einen Schlüssel einer Public-Key-Infrastruktur, (vi) einen Umgebungsidentifikator, zum Beispiel eine Zugidentifikationsnummer, eine Wagennummer, Netzwerkkonfigurationen und/oder Seriennummern anderer Netzwerkteilnehmer und/oder dergleichen. Dies erlaubt ein zuverlässiges Feststellen von Änderungen der Betriebsbedingungen und das Durchführen entsprechender Reaktionen etwa durch Neuinitialisierung oder Aktualisierung des Netzwerkteilnehmers.

In einer weiteren bevorzugten Ausführungsform wird der Vergleich netzwerkteilnehmerseitig durchgeführt. Anders gesagt wird der Vergleich vom Netzwerkteilnehmer selbst durchgeführt. Dies hat den Vorteil, dass keine Rechenleistung des Servers beansprucht wird, was in Netzwerken mit einer Vielzahl an Netzwerkteilnehmern problematisch werden könnte. Zudem kann der Netzwerkteilnehmer automatisch und unmittelbar auf das Vergleichsergebnis reagieren, zum Beispiel durch Neuinitialisierung.

Es ist aber auch denkbar, dass die Betriebsanfrage als konditionelle Anfrage gesendet wird, welche die netzwerkteilnehmerseitige Betriebsinformation charakterisiert. Zweckmäßigerweise wird der Vergleich zwischen der serverseitigen Betriebsinformation und der netzwerkteilnehmerseitigen Betriebsinformation dann serverseitig durchgeführt und die serverseitige Betriebsinformation in Abhängigkeit des Vergleichsergebnisses (an den Netzwerkteilnehmer) übermittelt. Die serverseitige Betriebsinformation kann dabei auch durch eine leere Nachricht bzw. Antwort auf die Betriebsanfrage repräsentiert werden, zum Beispiel wenn die netzwerkteilnehmerseitige und die serverseitige Betriebsinformation übereinstimmen. Insofern lässt sich hierdurch der Datenverkehr noch weiter reduzieren.

Es ist hierzu zweckmäßig, dass die Betriebsanfrage eine spezifische Kopfzeile, etwa einen sog. HTTP ETag header, enthält. Daran kann der Server erkennen, dass die Übermittlung von vorgegebenen Konfiguration- und/oder aktuellen Betriebsumgebungsdaten nicht erforderlich ist, wenn die mit der Betriebsanfrage übermittelte netzwerkteilnehmerseitige Betriebsinformation mit der serverseitigen Betriebsinformation übereinstimmt. Der Server kann auf die Betriebsanfrage dementsprechend mit einer HTTP Status 304-Nachricht antworten, die dem Netzwerkteilnehmer signalisiert, dass die ihm vorliegende Betriebsinformation korrekt bzw. aktuell ist.

In einer weiteren bevorzugten Ausführungsform veranlasst der Server das Senden der Betriebsanfrage. Beispielsweise kann ein sogenannter trigger & fetch-Mechanismus vorgesehen sein, auf dessen Grundlage der Server bzw. ein im Netzwerk laufender Dienst dem Netzwerkteilnehmer signalisieren kann, dass eine Betriebsanfrage notwendig oder gewünscht ist. Dadurch können insbesondere zeitkritische Aktionen, zum Beispiel die Installation eines neuen Schlüssels etwa zum Zugriff auf ein Repository, gezielt angeregt werden.

In einer weiteren bevorzugten Ausführungsform enthält die Betriebsanfrage eine Ursprungsinformation, auf deren Grundlage der Server die serverseitige Betriebsinformation bereitstellt und an den Netzwerkteilnehmer sendet. Die Ursprungsinformation kann beispielsweise eine Information über seine aktuelle Netzwerkkonfiguration, den Typ des Netzwerkteilnehmers, sein Einsatzgebiet, seine Wirkweise, die durch ihn im Netzwerk bereitgestellten oder bereitstellbaren Daten und/oder dergleichen enthalten. Dadurch kann der Server zuverlässig die benötigte (spezifische) Betriebsinformation abrufen oder zusammenstellen und dem Netzwerkteilnehmer zukommen lassen.

Die Ursprungsinformation ist beispielsweise eines der folgenden: eine Geräteidentifikationsnummer, eine IP-Adresse, eine MAC-Adresse, eine Seriennummer des Netzwerkteilnehmers.

Um einen Missbrauch des erfindungsgemäßen Verfahrens verhindern oder zumindest erschweren zu können, ist die Ursprungsinformation vorzugsweise kryptographisch geschützt. Ein besonders guter Schutz ist erreichbar, wenn die Ursprungsinformation kryptographisch gehasht ist. Hierzu kann die Ursprungsinformation beispielsweise einen kryptographischen Hashwert, etwa der Geräteidentifikationsnummer, der IP-Adresse, der MAC-Adresse und/oder der Seriennummer des Netzwerkteilnehmers umfassen.

In einem Netzwerk, insbesondere Zugnetzwerk, gemäß einem zweiten Aspekt der Erfindung ist ein Server mit einem Netzwerkteilnehmer verbunden. Der Netzwerkteilnehmer ist dazu eingerichtet, eine Betriebsanfrage an den Server zu senden, und der Server ist dazu eingerichtet, als Antwort auf die Betriebsanfrage eine serverseitige Betriebsinformation an den Netzwerkteilnehmer zu senden. Die serverseitige Betriebsinformation charakterisiert dabei eine vorgegebene Konfiguration des Netzwerkteilnehmers und eine aktuelle Betriebsumgebung des Netzwerkteilnehmers. Zudem ist der Server oder der Netzwerkteilnehmer dazu eingerichtet, die serverseitige Betriebsinformation mit einer netzwerkteilnehmerseitigen Betriebsinformation, welche die aktuelle Konfiguration des Netzwerkteilnehmers und eine erwartete Betriebsumgebung des Netzwerkteilnehmers charakterisiert, zu vergleichen und in Abhängigkeit eines Ergebnisses des Vergleichs eine zumindest teilweise Neuinitialisierung des Netzwerkteilnehmers zu veranlassen. Das Netzwerk kann insofern dazu eingerichtet sein, das Verfahren gemäß dem ersten Aspekt der Erfindung auszuführen.

In einem derartigen Netzwerk können Netzwerkteilnehmer einfach und aufwandsarm ausgetauscht werden, da eine Neuinitialisierung, insbesondere ein Zurücksetzen des neu in das Netzwerk integrierten Netzwerkteilnehmers und ein darauf folgendes Bootstrapping, automatisiert durchführbar sind und keine weitere manuelle Handlung erfordern. Zum anderen erleichtert ein derartiges Netzwerk die Verwaltung von Netzwerkteilnehmern, insbesondere von kryptographischer Information, da diesbezügliche Änderungen nur zentral am Server erfolgen müssen. Die Netzwerkteilnehmer werden bei der nächsten Betriebsanfrage dann automatisch zur Aktualisierung veranlasst.

Der Server und/oder der Netzwerkteilnehmer können hard- und/oder softwaretechnisch ausgebildet sein. Der Server und/oder der Netzwerkteilnehmer können insbesondere eine, vorzugsweise mit einem Speicher- und/oder Bussystem daten- bzw. signalverbundene, Verarbeitungseinheit aufweisen. Beispielsweise können der Server und/oder der Netzwerkteilnehmer eine Mikroprozessoreinheit (CPU) oder ein Modul einer solchen und/oder ein oder mehrere Programme oder Programmmodule aufweisen. Der Server und/oder der Netzwerkteilnehmer können dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren verkörpert bzw. auszuführen imstande ist, sodass der Server und/oder der Netzwerkteilnehmer die Schritte solcher Verfahren ausführen können und damit insbesondere der Netzwerkteilnehmer überwacht und/oder betrieben werden kann.

Ein Computerprogrammprodukt gemäß einem dritten Aspekt der Erfindung weist Anweisungen auf, welche ein Netzwerk gemäß dem zweiten Aspekt der Erfindung dazu veranlassen, das Verfahren gemäß dem ersten Aspekt der Erfindung auszuführen. Insofern lassen sich mit dem Computerprogrammprodukt dieselben Vorteile erzielen, die voranstehend bereits im Zusammenhang mit dem Verfahren beschrieben wurden.

Ein computerlesbares Medium gemäß einem vierten Aspekt der Erfindung weist ein Computerprogrammprodukt gemäß dem dritten Aspekt der Erfindung auf. Insbesondere kann das Computerprogrammprodukt auf dem computerlesbaren Medium gespeichert sein.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. Soweit zweckdienlich, werden in den Figuren dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Anspruchs kombiniert werden.

Es zeigen, zumindest teilweise schematisch:
- FIG 1: ein Beispiel von Zügen bei der Wartung;
- FIG 2: ein Beispiel eines Netzwerkes mit einem Server und einem Netzwerkteilnehmer; und
- FIG 3: ein Beispiel eines Verfahrens zum Betreiben eines Netzwerkteilnehmers in einem Netzwerk.

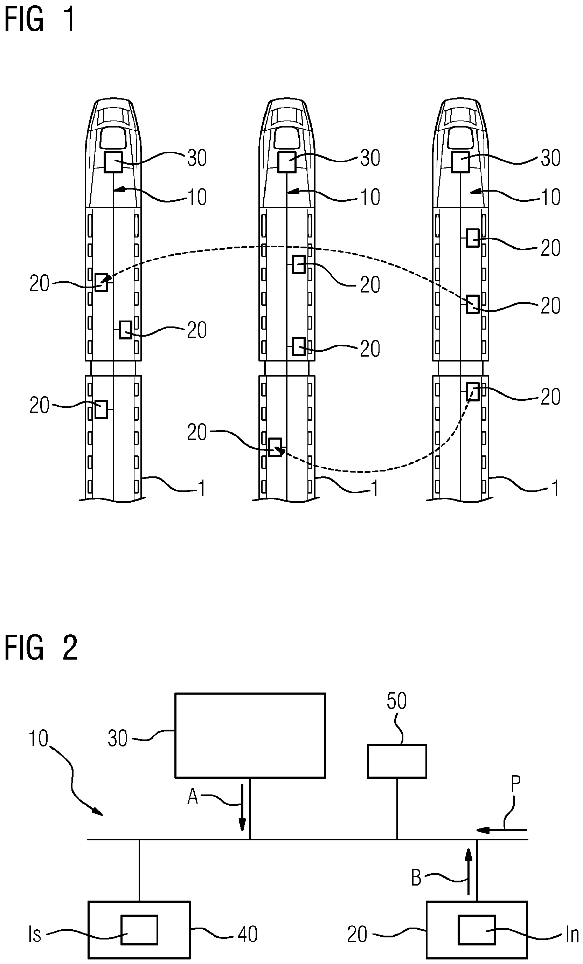

FIG 1 zeigt ein Beispiel von Zügen 1 bei der Wartung. Jeder dieser Züge 1 weist ein Zugnetzwerk 10 auf, in dem verschiedene Netzwerkteilnehmer 20 miteinander signal- bzw. datenverbunden sind. In jedem Zugnetzwerk 10 ist zudem ein zentraler Zugserver 30 installiert, der das jeweilige Netzwerk 10 verwaltet.

Als Netzwerkteilnehmer 20 werden die verschiedenen Komponenten der Züge 1 bezeichnet, beispielsweise deren Sensoren, Aktuatoren, Recheneinheiten und/oder dergleichen, die an das jeweilige Netzwerk 10 angeschlossen sind. Bei der Wartung der Züge 1 werden gegebenenfalls einzelne dieser Komponenten ausgetauscht. Dabei ist es nicht unüblich, dass die Austauschkomponenten einem außer Dienst gestellten Zug 1 entnommen und in einem anderen Zug 1 weiterverwendet werden. Dies ist durch die gestrichelten Pfeile angedeutet.

Die derart weiterverwendeten Komponenten bilden in den Zugnetzwerken 10 neue Netzwerkteilnehmer 20, die auf ihren Einsatz in einem anderen Netzwerk 10 und in einer anderen Betriebsumgebung, d. h. in einem anderen Zug 1, erst vorbereitet werden müssen. Konventionell geschieht dies durch ein manuelles Zurücksetzen der auszubauenden oder ausgebauten Netzwerkteilnehmer 20 und ein Bootstrapping im anderen Netzwerk 10 nach dem Einbau. Dabei erhält der umgebaute Netzwerkteilnehmer 20 in der Regel eine neue Netzwerkkonfiguration, zum Beispiel eine neue Netzwerkadresse, sowie weitere zum Betrieb im Netzwerk 10 notwendige Daten, etwa die Adresse eines Repositorys für Software und/oder (Konfigurations- oder Meta-)Daten. Insbesondere wird dem Netzwerkteilnehmer 20 dabei auch seine neue Betriebsumgebung zur Kenntnis gebracht. Insofern erhält der Netzwerkteilnehmer 20 durch dieses Bootstrapping seine netzwerkspezifische "Persönlichkeit".

Eine weitere Wartungshandlung betrifft das Aktualisieren von einzelnen Netzwerkteilnehmern 20, insbesondere deren Software und/oder Konfiguration. Auch hierzu muss üblicherweise Wartungspersonal tätig werden und solche Updates manuell ansto-ßen. Gegebenenfalls kann auch hierbei ein vollständiges Zurücksetzen des zu aktualisierenden Netzwerkteilnehmers 20 notwendig sein.

FIG 2 zeigt ein Beispiel eines Netzwerkes 10, insbesondere eines Zugnetzwerks, mit einem Server 30 und einem Netzwerkteilnehmer 20. Ebenfalls an das Netzwerk 10 angeschlossen ist eine Benutzerschnittstelle 50 sowie eine Speichervorrichtung 40, auf der eine serverseitige Betriebsinformation Is gespeichert ist. In ähnlicher Weise ist auf dem Netzwerkteilnehmer 20 eine netzwerkteilnehmerseitige Betriebsinformation In gespeichert. Während die serverseitige Betriebsinformation Is vorzugsweise eine vorgegebene Konfiguration des Netzwerkteilnehmers 20 in der aktuellen Betriebsumgebung charakterisiert, stellt die netzwerkteilnehmerseitige Betriebsinformation In zweckmäßigerweise eine aktuelle Konfiguration des Netzwerkteilnehmers 20 in einer erwarteten Betriebsumgebung dar. Anders gesagt kann die serverseitige Betriebsinformation Is als Soll-Zustand des Netzwerkteilnehmers 20 interpretiert werden, während die netzwerkseitige Betriebsinformation In einen Ist-Zustand des Netzwerkteilnehmers 20 repräsentiert.

Der Netzwerkteilnehmer 20 ist dazu eingerichtet, eine Betriebsanfrage B an den Server 30 zu senden. Zweckmäßigerweise versendet der Netzwerkteilnehmer 20 die Betriebsanfrage B bei seiner Inbetriebnahme im Netzwerk 10. Alternativ oder zusätzlich kann der Netzwerkteilnehmer 20 die Betriebsanfrage B aber auch senden, nachdem er vom Server 30 oder einem anderen Netzwerkteilnehmer (nicht gezeigt) eine entsprechende Aufforderung P erhalten hat. Dazu weist der Netzwerkteilnehmer 20 zweckmäßigerweise eine entsprechende (Software-)Schnittstelle auf, über die solche auch als "poke" bezeichneten Aufforderungen P empfangen werden können.

Optional kann der Netzwerkteilnehmer 20 auch dazu eingerichtet sein, die Betriebsanfrage B zyklisch, zum Beispiel alle 2 Stunden, an den Server 30 zu senden.

Um die Betriebsanfrage B auch dann senden zu können, wenn der Netzwerkteilnehmer 20 neu in das Netzwerk 10 integriert wurde und beispielsweise erstmalig gestartet wird, ist der Netzwerkteilnehmer 20 zweckmäßigerweise dazu eingerichtet, mit der Betriebsanfrage B auf eine sogenannte well-known URI zuzugreifen. Anders gesagt ist der Server 30 zweckmäßigerweise unter einer fest vorgegebenen, vorzugsweise netzwerkübergreifenden, Adresse erreichbar. Beispielsweise kann die Betriebsanfrage B an die Zugserver verschiedener Züge immer mit der gleichen Adresse gerichtet werden.

Der Server 30 ist zweckmäßigerweise dazu eingerichtet, als Antwort A auf die Betriebsanfrage B die serverseitige Betriebsinformation Is an den Netzwerkteilnehmer 20 zu senden. Zu diesem Zweck kann der Server 30 im gezeigten Beispiel auf die Speichervorrichtung 40 zugreifen. Dort ist die Betriebsinformation Is in bevorzugter Weise in Form eines JSON-Objekts hinterlegt.

Es ist jedoch auch denkbar, dass der Server 30 die Betriebsinformation Is aus einer anderen Quelle bzw. über eine andere Schnittstelle abrufen kann. Gegebenenfalls kann der Server 30 auch dazu eingerichtet sein, die serverseitige Betriebsinformation Is zu ermitteln, zum Beispiel aus dem Kontext weiterer Netzwerkteilnehmer (nicht gezeigt) im Netzwerk 10 oder aus einer Benutzereingabe über die Benutzerschnittstelle 50. Insbesondere kann der Server 30 dazu eingerichtet sein, die Betriebsinformation Is dynamisch mithilfe wenigstens einer Vorlage (template) zusammenzusetzen.

Um die serverseitige Betriebsinformation Is gezielt an den anfragenden Netzwerkteilnehmer 20 senden zu können, enthält die Betriebsanfrage B zweckmäßigerweise eine Ursprungsinformation, aus welcher der Server 30 den Sender der Betriebsanfrage B identifizieren und/oder eine Rücksendeadresse ableiten kann.

Der Netzwerkteilnehmer 20 ist in bevorzugter Weise dazu eingerichtet, die empfangene serverseitige Betriebsinformation Is mit der netzwerkteilnehmerseitigen Betriebsinformation In zu vergleichen. Anders gesagt kann der Netzwerkteilnehmer 20 seinen Ist-Zustand mit einem Soll-Zustand vergleichen. In Abhängigkeit eines Ergebnisses des Vergleichs kann der Netzwerkteilnehmer 20 zumindest teilweise neuinitialisiert, d. h. zum Beispiel auf die Werkseinstellungen zurückgesetzt und dann neu im Netzwerk 10 angemeldet oder zumindest einige Konfigurationsparameter aktualisiert, werden.

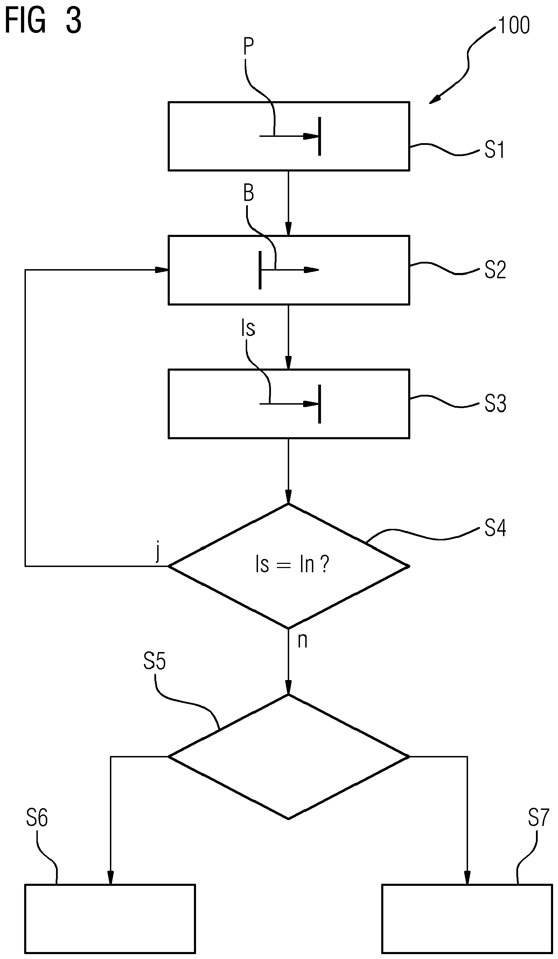

FIG 3 zeigt ein Beispiel eines Verfahrens 100 zum Betreiben eines Netzwerkteilnehmers in einem Netzwerk, insbesondere einem Zugnetzwerk.

In einem optionalen Verfahrensschritt S1 empfängt der Netzwerkteilnehmer eine Aufforderung P, eine Betriebsanfrage B an einen Server im Netzwerk zu stellen. Eine solche Aufforderung P muss nicht gesichert erfolgen, da sie den Netzwerkteilnehmer bzw. seine Konfiguration nicht beeinflusst.

Auf die Aufforderung P hin kann der Netzwerkteilnehmer in einem weiteren Verfahrensschritt S2 die Betriebsanfrage B an einen Server im Netzwerk senden. Zweckmäßigerweise entspricht die Betriebsanfrage B der Anfrage einer Ressource vom Server, zum Beispiel einer Datei enthaltend eine serverseitig vorgehaltene Betriebsinformation Is des Netzwerkteilnehmers. Die Betriebsanfrage B kann etwa mit einem einfachen HTTP GET-Befehl gestellt werden.

Zweckmäßigerweise wird die Betriebsanfrage B an eine vorgegebene Adresse geschickt. Insbesondere entspricht das Senden der Anfrage B einem Zugriff auf die vorgegebene Adresse, insbesondere auf eine sogenannte well-known URI. In einem Zugnetzwerk kann die Betriebsanfrage B an einen Zugserver (trainserver) beispielsweise lauten:
https://trainserver.lton.ltrain/.well-known/trainit/Is.

Die Betriebsanfrage B enthält zweckmäßigerweise eine Ursprungsinformation, anhand welcher der Server den die Betriebsanfrage B stellenden Netzwerkteilnehmer ermitteln und die passende Betriebsinformation Is bereitstellen kann. Insofern kann der Netzwerkteilnehmer in einem weiteren Verfahrensschritt S3 die serverseitige Betriebsinformation Is empfangen. Beispielsweise kann der Netzwerkteilnehmer im Verfahrensschritt S3 die Betriebsinformation Is vom Server, insbesondere von der oben genannten vorgegebenen Adresse, abrufen.

Vorzugsweise wird dem Netzwerkteilnehmer dabei wenigstens eine Software- und/oder Datenadresse mitgeteilt, unter der bei Bedarf zu installierende Software und/oder Meta- und/oder Konfigurationsdaten abrufbar sind. Beispielsweise kann dem Netzwerkteilnehmer eine Software-Repository URI mitgeteilt werden. Zweckmäßigerweise erhält der Netzwerkteilnehmer zudem einen entsprechenden kryptographischen Schlüssel für das Software-Repository, um bei Bedarf Zugriff auf das Repository bzw. die zu installierende Software zu haben. Es ist ebenso bevorzugt, dass der Netzwerkteilnehmer ein Zertifikat einer Zertifizierungsstelle (CA-Zertifikat) erhält, um sicher in dem Netzwerk kommunizieren zu können. Zweckmäßigerweise erhält der Netzwerkteilnehmer auch wenigstens ein Metadaten-Repository, dem der Netzwerkteilnehmer Daten zu einer vorgegebenen Konfiguration und/oder der aktuellen Betriebsumgebung entnehmen kann.

In einem weiteren Verfahrensschritt S4 wird die vom Server bereitgestellte Betriebsinformation Is mit einer netzwerkteilnehmerseitigen Betriebsinformation In verglichen. Dabei kann geprüft werden, ob eine durch die netzwerkteilnehmerseitige Betriebsinformation In charakterisierte aktuelle Konfiguration des Netzwerkteilnehmers von einer durch die serverseitige Betriebsinformation Is charakterisierten vorgegebenen Konfiguration abweicht. Alternativ oder zusätzlich kann geprüft werden, ob eine durch die netzwerkteilnehmerseitige Betriebsinformation In charakterisierte erwartete Betriebsumgebung des Netzwerkteilnehmers von einer durch die serverseitigen Betriebsinformation Is charakterisierten aktuellen Betriebsumgebung abweicht.

Dazu werden beispielsweise die in Verfahrensschritt S3 abgerufenen bzw. dem Netzwerkteilnehmer bereitgestellten Informationen wie die Software Repository URI, der kryptographische Schlüssel, das CA-Zertifikat, das Metadaten-Repository und/oder die darin enthaltenen Daten mit entsprechenden Einträgen etwa in einem Speicher des Netzwerkteilnehmers verglichen.

Gleicht die serverseitige Betriebsinformation Is der netzwerkteilnehmerseitigen Betriebsinformation In, d. h. können keine Abweichungen zwischen den dadurch charakterisierten Konfigurationen und/oder Betriebsumgebungen festgestellt werden, kann der Netzwerkteilnehmer nach Ablauf einer vorgegebenen Zeitdauer, zum Beispiel 2 Stunden, erneut eine Betriebsanfrage B den Server senden.

Unterscheidet sich die serverseitige Betriebsinformation Is jedoch von der netzwerkteilnehmerseitigen Betriebsinformation In, kann davon ausgegangen werden, dass eine Neu- oder Umkonfigurierung des Netzwerkteilnehmers notwendig ist. In einem weiteren optionalen Verfahrensschritt S5 kann daher geprüft werden, ob diese Konfiguration vollumfassend sein muss, oder ob eine nur teilweise (partielle) Neu- oder Umkonfigurierung ausreichend ist.

Beispielsweise kann in Verfahrensschritt S5 überprüft werden, ob sich eine vorgegebene Netzwerkkonfiguration von der aktuellen Netzwerkkonfiguration unterscheidet. Es kann etwa geprüft werden, ob die abgerufene Software-Repository URI mit einer dem Netzwerkteilnehmer bekannten URI übereinstimmt. Ist dies nicht der Fall, kann der Netzwerkteilnehmer in einem weiteren Verfahrensschritt S6 auf die Werkseinstellung zurückgesetzt und ein Bootstrapping durchgeführt werden, in dessen Rahmen der Netzwerkteilnehmer die vorgegebene Konfiguration und die Information zur aktuellen Betriebsumgebung erhält.

Alternativ oder zusätzlich kann auch geprüft werden, ob sich lediglich der durch die serverseitige Betriebsinformation Is charakterisierte kryptographische Schlüssel von einem dem Netzwerkteilnehmer bereits bekannten Schlüssel unterscheidet. Ist dies der Fall, kann in einem weiteren Verfahrensschritt S7 die serverseitige Betriebsinformation Is genutzt werden, um den Schlüssel zu aktualisieren. Beispielsweise kann der Netzwerkteilnehmer aus der serverseitigen Betriebsinformation Is eine Adresse entnehmen, unter der er den aktuellen Schlüssel abrufen kann.

Die Reihenfolge der in FIG 3 gezeigten Verfahrensschritte ist nicht zwingend. Beispielsweise kann der Vergleich in Verfahrensschritt S4 nach dem Senden der serverseitigen Betriebsinformation Is an den Netzwerkteilnehmer in Verfahrensschritt S3 netzwerkteilnehmerseitig durchgeführt werden. Es ist aber auch denkbar, dass mit der Betriebsanfrage B in Verfahrensschritt S2 bereits die netzwerkteilnehmerseitige Betriebsinformation In an den Server übermittelt und infolgedessen der Vergleich in Verfahrensschritt S4 serverseitig durchgeführt wird. In diesem Fall kann, abhängig vom Vergleichsergebnis, die serverseitige Betriebsinformation Is auch anschließend, etwa zur teilweisen (partiellen) Umkonfiguration des Netzwerkteilnehmers übermittelt werden.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (100) zum Betreiben eines Netzwerkteilnehmers (20) in einem Netzwerk (10), insbesondere einem Zugnetzwerk, aufweisend:
- Senden (S2) einer Betriebsanfrage (B) von einem Netzwerkteilnehmer (20) an einen mit dem Netzwerkteilnehmer (20) über ein Netzwerk (10) verbundenen Server (30);
- Senden (S3) einer serverseitigen Betriebsinformation (Is) vom Server (30) an den Netzwerkteilnehmer (20) als Antwort (A) auf die Betriebsanfrage (B), wobei die serverseitige Betriebsinformation (Is) eine vorgegebene Konfiguration des Netzwerkteilnehmers (20) und eine aktuelle Betriebsumgebung des Netzwerkteilnehmers (20) charakterisiert;
- Vergleichen (S4) der serverseitigen Betriebsinformation (Is) mit einer netzwerkteilnehmerseitigen Betriebsinformation (In) des Netzwerkteilnehmers (20), welche die aktuelle Konfiguration des Netzwerkteilnehmers (20) und eine erwartete Betriebsumgebung des Netzwerkteilnehmers (20) charakterisiert; und
- in Abhängigkeit eines Ergebnisses des Vergleichs, zumindest teilweise Neuinitialisierung (S6, S7) des Netzwerkteilnehmers (20).

2. Verfahren (100) nach Anspruch 1, wobei die Betriebsanfrage (B) zunächst bei Inbetriebnahme des Netzwerkteilnehmers (20) im Netzwerk (10) und anschließend periodisch gesendet wird.

3. Verfahren (100) nach einem der Ansprüche 1 oder 2, wobei die serverseitige Betriebsinformation (Is) ein Hashwert ist und mit einem aus der aktuellen Konfiguration des Netzwerkteilnehmers (20) und der erwarteten Betriebsumgebung erzeugten Hashwert verglichen wird.

4. Verfahren (100) nach einem der vorangehenden Ansprüche, wobei die serverseitige Betriebsinformation (Is) statisch ist.

5. Verfahren (100) nach einem der vorangehenden Ansprüche, wobei die serverseitige Betriebsinformation (Is) als Antwort (A) auf die Betriebsanfrage (B) aus verschiedenen Informationsquellen zusammengesetzt wird und einen kryptographischen Hashwert wenigstens eines der folgenden enthält: einer Netzwerkkonfiguration des Netzwerkteilnehmers (20), einer oder mehreren Adressen eines Daten- und/oder Software-Speichers, eines Schlüssels und/oder Zertifikats einer Public-Key-Infrastruktur.

6. Verfahren (100) nach Anspruch 5, wobei die serverseitige Betriebsinformation (Is) gezielt derart zusammengesetzt wird, dass ein vorgegebenes Vergleichsergebnis erzeugt und eine vorgegebene zumindest teilweise Neuinitialisierung eingeleitet wird.

7. Verfahren (100) nach einem der vorangehenden Ansprüche, wobei in Abhängigkeit des Vergleichsergebnisses
- der Netzwerkteilnehmer (20) zunächst in einen Ursprungszustand zurückgesetzt und anschließend mit der vorgegebenen Konfiguration und in der aktuellen Betriebsumgebung in Betrieb genommen wird oder
- zunächst vom Netzwerkteilnehmer (20) gesammelte Daten gelöscht und/oder der Netzwerkteilnehmer in den Ursprungszustand zurückgesetzt und der Netzwerkteilnehmer (20) anschließend außer Betrieb genommen wird.

8. Verfahren (100) nach einem der vorangehenden Ansprüche, wobei in Abhängigkeit des Vergleichsergebnisses eine kryptographische Information des Netzwerkteilnehmers (20) erneuert wird.

9. Verfahren (100) nach einem der vorangehenden Ansprüche, wobei die Betriebsinformation (Is, In) zumindest eines der folgenden kennzeichnet: eine Netzwerkkonfiguration, eine Software- oder Datenadresse, ein Zertifikat und/oder einen Schlüssel einer Public-Key-Infrastruktur, einen Umgebungsidentifikator.

10. Verfahren (100) nach einem der vorangehenden Ansprüche, wobei der Vergleich netzwerkteilnehmerseitig durchgeführt wird.

11. Verfahren (100) nach einem der Ansprüche 1 bis 9, wobei
- die Betriebsanfrage (B) als konditionelle Anfrage gesendet wird, welche die netzwerkteilnehmerseitige Betriebsinformation (In) charakterisiert,
- der Vergleich zwischen der serverseitigen Betriebsinformation (Is) und der netzwerkteilnehmerseitigen Betriebsinformation (In) serverseitig durchgeführt wird, und
- die serverseitige Betriebsinformation (Is) in Abhängigkeit des Vergleichsergebnisses übermittelt wird.

12. Verfahren (100) nach einem der vorangehenden Ansprüche, wobei der Server (30) das Senden der Betriebsanfrage (B) veranlasst (S1).

13. Verfahren (100) nach einem der vorangehenden Ansprüche, wobei die Betriebsanfrage (B) eine Ursprungsinformation enthält, auf deren Grundlage der Server (30) die serverseitige Betriebsinformation (Is) bereitstellt und an den Netzwerkteilnehmer (20) sendet, wobei die Ursprungsinformation einen kryptographischen Hashwert wenigstens eines der folgenden umfasst: eine Geräteidentifikationsnummer, eine IP-Adresse, eine MAC-Adresse, eine Seriennummer des Netzwerkteilnehmers (20).

14. Netzwerk (10), insbesondere Zugnetzwerk, in dem ein Server (30) mit einem Netzwerkteilnehmer (20) verbunden ist, wobei
- der Netzwerkteilnehmer (20) dazu eingerichtet ist, eine Betriebsanfrage (B) an den Server (30) zu senden,
- der Server (30) dazu eingerichtet ist, als Antwort (A) auf die Betriebsanfrage (B) eine serverseitige Betriebsinformation (Is) an den Netzwerkteilnehmer (20) zu senden, wobei die Betriebsinformation (Is) eine vorgegebene Konfiguration des Netzwerkteilnehmers (20) und eine aktuelle Betriebsumgebung des Netzwerkteilnehmers (20) charakterisiert, und
- der Server (30) oder der Netzwerkteilnehmer (20) dazu eingerichtet ist, die serverseitige Betriebsinformation (Is) mit einer netzwerkteilnehmerseitigen Betriebsinformation (In), welche die aktuelle Konfiguration des Netzwerkteilnehmers (20) und eine erwartete Betriebsumgebung des Netzwerkteilnehmers (20) charakterisiert, zu vergleichen und in Abhängigkeit eines Ergebnisses des Vergleichs eine zumindest teilweise Neuinitialisierung des Netzwerkteilnehmers (20) zu veranlassen.

15. Computerprogrammprodukt aufweisend Anweisungen, welche ein Netzwerk (10) nach Anspruch 14 dazu veranlassen, das Verfahren (100) nach einem der Ansprüche 1 bis 13 auszuführen.
